# EUROPEAN PATENT APPLICATION

(11) **EP 1 352 825 A1**
(43) Date of publication of application: **15.10.2003**
(21) Application number: 02425216.5
(22) Date of filing: 09.04.2002
(51) Int. Cl.: B62M 3/00

(54) **Connection component for bicycles**

(71) Applicant: Campagnolo Srl, 36100 Vicenza (VI) (IT)
(72) Inventor: Meggiolan, Mario, 36051 Creazzo (IT)
(74) Representative: Notaro, Giancarlo

(57) **Abstract**

A fixing component for a bicycle destined to be connected fixedly and removably to a complementary bicycle component, such as for example a cap for the bottom bracket of a bicycle, comprising a fixing portion (12) and an engaging portion (18) having a profile (18) suitable to be engaged by a tool (20) for applying a torque with a complementary profile. The profile (18) of the fixing component (8) and the profile (21) of the tool (20) have a substantially trilateral profile, preferably with rounded vertices so as to define a trilobate profile.

## Description

The present invention relates in general to a fixing component for bicycles destined to be connected rigidly and removably to a complementary bicycle component, comprising a fixing portion and an engaging portion with a profile suitable to be engaged by a tool for applying a torque.

Fixing components of this type are used to connect various bicycle components to one another. For example, this definition includes the bottom bracket caps, used to assemble the bearings which hold the bottom bracket spindle and the connection screws for fixing each of the two bicycle pedal cranks to the bottom bracket spindle.

In bicycles in general and specifically in racing bicycles there is an increasing need to produce fixing components which are simultaneously simple, sturdy and light. Simplicity of the component is intended with reference to the simplicity and consequent low cost of the operations required to manufacture the component. Sturdiness is another fundamental characteristic which must be intended both with reference to absolute stability of the connection and to the possibility of guaranteeing the transmission even of high stresses in various stress conditions, such as tractive, bending and torsional stress. Finally, the structure of the fixing component must also be as light as possible, in order to contribute towards maximum efficiency of the bicycle.

In an embodiment of the present invention, the fixing component is produced in the form of a cap for assembling, in the bottom bracket shell, the bearings for rotation of the bottom bracket spindle. Traditional caps for bottom bracket shells of bicycles have a grooved profile made of a plurality of small teeth, destined to be engaged by a complementary tool to apply a tightening or loosening torque.

One of the objects of the present invention is to provide a cap for the bottom bracket shell which, in relation to prior art solutions, makes it possible to reduce the section and weight and, simultaneously, to increase the rigidity of the component. Moreover, another object of the present invention is to reduce the manufacturing costs for the component and to provide a cap that allows an increase in free space for the bottom bracket spindle and consequently facilitates operations to tighten and loosen the cap. The present invention also has the further object of extending the life of the cap, avoiding problems caused by wear and breakage of the profile which couples with the tightening tool.

The bottom bracket cap represents one of the possible examples of embodiment of the present invention, although it is understood that the invention may also be applied to realize fixing screws for bicycles and in general to any fixing component for bicycles, such as screws for fixing the pedal cranks to the bottom bracket spindle.

The most general object of the present invention is to make a fixing component for bicycles of the type indicated at the beginning of the present description which is able to satisfy in the best possible manner all the requirements above mentioned.

With a view to attaining this object, the invention relates to a fixing component for a bicycle, destined to be connected fixedly and removably to a complementary bicycle component, comprising a fixing portion and an engaging portion having a profile suitable to be engaged by a tool to apply a torque, characterized in that said profile is substantially trilateral.

Thanks to this characteristic, the fixing component according to the invention, is able to guarantee the necessary precision and sturdiness of coupling with the tightening tool and to allow relatively simple and low cost manufacturing operations. Simultaneously, the conformation with trilateral profile is ideal also from the point of view of simplicity and lightness of the component. The trilateral profile may have one or more sides rectilinear, or partly curved, according to any possible combination. The curved sides may be arched towards the centre of the trilateral profile or towards the outside of the trilateral profile. The trilateral profile may be substantially equilateral, substantially isosceles, or an irregular trilateral profile. According to a preferred embodiment, the trilateral profile has one or more rounded vertices and preferably all three rounded vertices in order to define a trilobate profile. The three sides of the trilobate profile may also be concaved towards the inside of the trilateral profile, in order to define a figure with three radial petals, angularly spaced apart, or arched towards the outside, with a convex profile.

The present invention also relates to a tool for applying a torque to the fixing component, including a head with a profile suitable to engage a complementary profile of the fixing component, characterized in that said profile is substantially trilateral.

Further characteristics and advantages of the invention shall become clear from the detailed description hereunder, provided purely as a nonlimiting example, in which:
- figure 1 is a partly sectional view of a bicycle bottom bracket using two fixing caps according to the present invention,
- figures 2 and 3 are sections according to the lines II-II and III-III in figure 1,
- figure 4 is a perspective view showing the cap indicated by the arrow IV in figure 1 associated with a tightening tool,
- figure 5 is a perspective view of the cap indicated by the arrow V in figure 1,
- figure 6 is a plan view of the tightening tool according to the arrow in figure 4, and
- figure 7 is an exploded perspective view showing a fixing screw according to the present invention associated with a tightening tool.

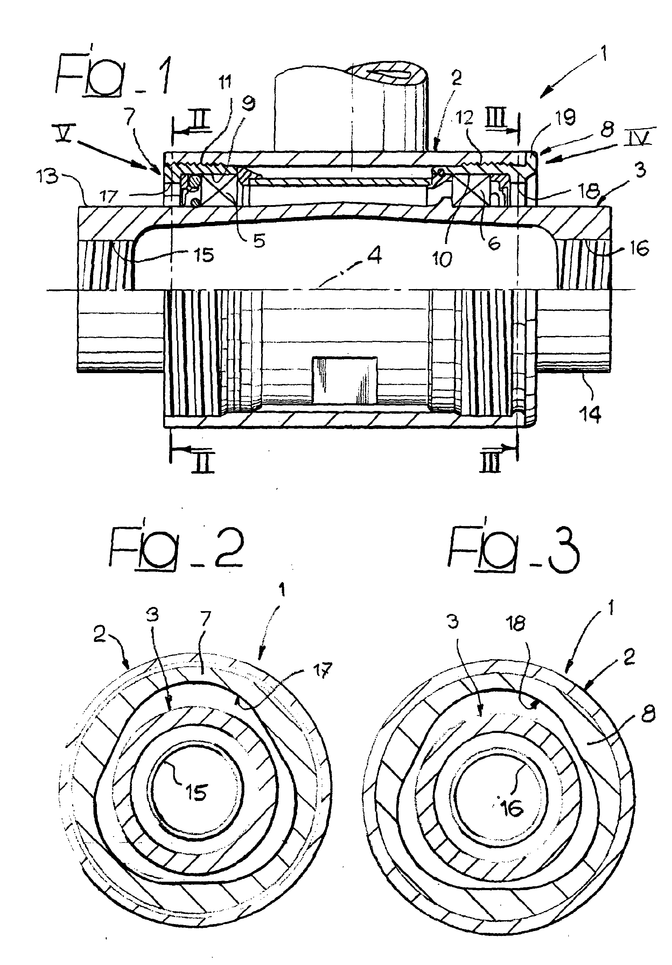

Figures 1 to 6 show a first embodiment of a fixing component for a bicycle. In this first embodiment, the fixing component has the form of a cap for the bottom bracket shell. In figure 1, reference number 1 indicates as a whole a bottom bracket of a bicycle. The bottom bracket 1 comprises a bottom bracket shell 2 which is part of the bicycle frame and a bottom bracket spindle 3 mounted in the shell 2 rotatably around its longitudinal axis 4. The bottom bracket spindle 3 is held by a pair of rolling bearings 5, 6. The bottom bracket 1 also comprises a pair of caps 7, 8 made according to the present invention. Each cap 7, 8 has a cylindrical internal surface 9, 10, in which is fitted the outer ring of the respective rolling bearing 5, 6 and a threaded fixing portion 11, 12 which engages a corresponding threaded end portion of the bottom bracket shell 2.

The bottom bracket spindle 3 has end portions 13, 14 that project laterally towards the outside of the caps 7, 8 and on each of which a respective pedal crank (not shown) is destined to be fitted. In the end portions 13, 14 of the bottom bracket spindle are threaded holes 15, 16 for engaging respective screws (not shown in figure 1) for fixing the pedal cranks.

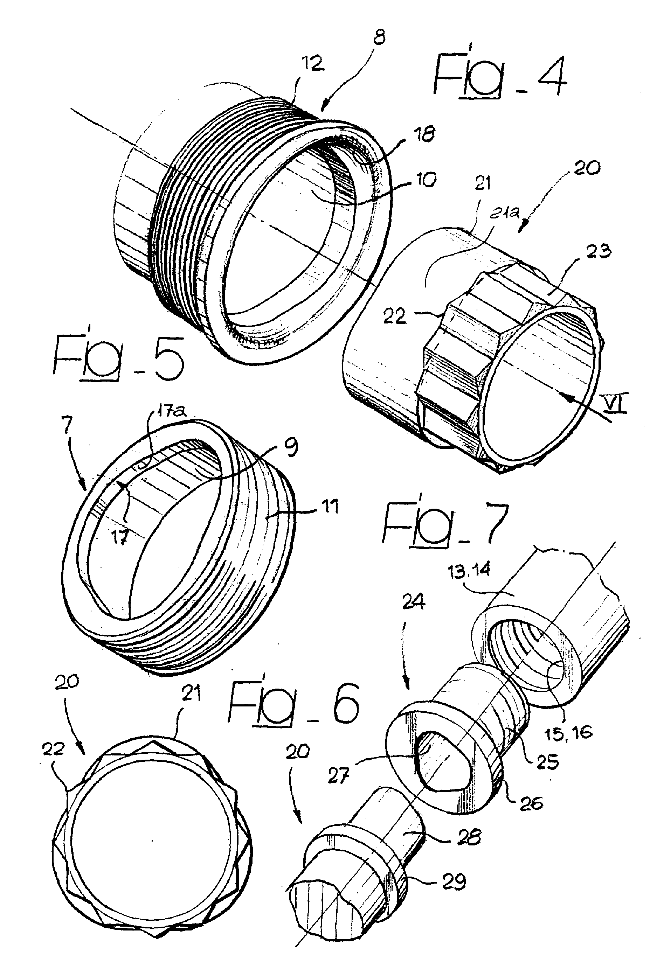

With reference to figures 2 to 5, the caps 7, 8 have respective through holes 17, 18 through which the end portions 13, 14 of the bottom bracket spindle 3 extend. Each of the holes 17, 18 forms an engaging portion with a profile suitable to be engaged by an tool for applying a torque. According to the present invention, the profile 17, 18 of at least one of the caps 7, 8 in a view in an orthogonal plane to the longitudinal axis of the cap 7, 8 has a substantially trilateral shape with rounded vertices, herein defined as trilobate profile. The lobes of the profile are formed by the rounded vertices. In the example shown in figures 2-3, the three sides of the trilateral profile with rounded vertices, or trilobate profile, are substantially rectilinear and equal to one another, in a way substantially analogous to an equilateral triangle. The theoretical triangle that gives rise to the trilobate profile has a centre coinciding with the longitudinal axis of the caps 7, 8, which, in the condition in which the caps 7, 8 are mounted in the bottom bracket shell, coincides with the axis 4 of the bottom bracket spindle 3. The trilateral profile 17, 18 may have different variants. For example, one or more sides of the trilateral profile may not be rectilinear, but at least partly curved, and arched towards the centre or towards the outside of the trilateral profile. In particular, it is possible for the coupling surfaces of the profiles 17, 18 with a male tightening tool to be in contact only by the three lobes or vertices of the profile, which have a predominant function in the transmission of torsional stress. For example, it is possible to give a concave conformation to the sides of the trilobate profile or to those of the complementary tightening element, or to both of them. Or, it is possible to foresee a trilobate profile with sides arched towards the outside so that coupling with the tightening tool is achieved only by these sides. Finally, it is, of course, possible to foresee a profile in which coupling is obtained both on the lobes, and on the sides.

It is also possible that the surface portions with trilobate profile present a tapered conformation, rather than a conformation with an axially uniform section like the one illustrated. With a view to this figure 5 shows a profile 17 with a wall 17a having a cylindrical conformation (in the sense that it has parallel generating straight lines) and therefore it has an axially uniform section. Alternatively, the wall 17a may have a conic conformation with rectilinear generating lines, a saddle-shaped tapered configuration, with generating profile arched towards the inside or a slightly convex tapered configuration, with generating profile arched towards the outside. Of course, in each of the aforesaid cases, the coupling zone of the tightening element has a complementary configuration.

The figures show the particular case in which the trilateral profile substantially has the shape of an equilateral triangle. Alternatively, the triangle may be isosceles or irregular. As a further alternative, the three sides of the trilobate profile may be concaved towards the inside of the trilateral profile, in order to define a figure with angularly spaced radial petals. In any case, the substantially trilateral or trilobate profile is very easy to obtain with tool machining and it is relatively simple to obtain excellent machining precisions. As can be seen in figures 2 and 3 the trilobate shaped holes 17, 18 leave a free space with ample dimensions around the bottom bracket spindle 3 which facilitates tightening and loosening operations of the caps 7, 8.

The cap 8 on the right in figure 1, also shown in figure 4, has a radial end flange 19 that comes into contact with one end of the bottom bracket shell 2 while the cap 7 on the left in figure 1, also shown in figure 5, has a thread 11 that extends substantially for the entire length of the external cylindrical surface and is fully inserted inside the bottom bracket shell 2.

Each of the two caps 7, 8 of the bottom bracket may be composed of a material chosen among the group comprising: aluminium or its alloys, steel or its alloys, technopolymers based on charged plastic, fabric based on structural fibres incorporated in a matrix of plastic material, said fibres being selected among carbon fibres, glass fibres, aramide fibres, boron fibres, ceramic fibres or any combination of these. The caps 7, 8 may be obtained by milling, shearing, moulding or injection. The two caps 7, 8 may also have threads with equal or opposite directions.

With reference to figures 4 and 5, the number 20 indicates a tool for applying a torque, that can be used to tighten and loosen the caps 7, 8. The tool 20 has an engaging portion 21 with a shape complementary to the shape of the holes 17, 18, which couples without interference with the profiles 17, 18 in order to apply a tightening or loosening torque to the caps 7, 8. Preferably, the mutually cooperating profiles of the tool 20 and of the caps 7, 8 are shaped in order to apply the torque mainly by means of the rounded vertices of the trilateral profile, although, as described above with reference to the cap profile , the side walls of the engaging portion 21 of the tool 20 may have a trilateral profile with rectilinear or at least partly curved sides, arched towards the centre or towards the outside of the trilateral profile. The profile of the engaging portion 21 may be shaped in order to engage the complementary hole only by the three lobes or vertices of the profile. As already described, it is possible to give a concave conformation to the sides of the tool engaging portion, or to those of the complementary hole, or to both of them. Or, it is possible to foresee a trilobate profile with sides arched towards the outside so that coupling with the complementary hole is produced only by these sides. Finally, it is, of course, possible to foresee a profile in which coupling is obtained both on the lobes, and on the sides.

It is also possible for the surface portion with trilobate profile of the engaging portion of the tool to have a tapered conformation, as a result of the shape of the complementary hole, instead of a conformation with an axially uniform section as that illustrated. In particular, the side wall 21a of the engaging portion 21 could have a cylindrical conformation like the one shown in figure 4, a conic conformation with rectilinear generating lines, a saddle-shaped tapered configuration with generating profile arched towards the inside, or a slightly convex tapered configuration with generating profile arched towards the outside.

According to a preferred embodiment, the tool 20 has a contact surface 22 that projects from the trilobate profile 21. The contact surface 22 comes into contact with the front surface of the cap 7, 8 when the engaging portion 21 of the tool 20 is inserted completely into the hole 17, 18. This contact surface 22 prevents the tool 20 from being inserted too deeply inside the bottom bracket and damaging the seals or the bearings. In the shown embodiment, the tool 20 for applying a torque has two engaging portions 21 and 23. The second engaging portion 23 has for example a star-shaped profile and can be used to engage a cap with a traditional engaging profile. The tool 20 is destined to be coupled with a wrench, lever or screwing device (not shown) with which the tightening or loosening torque is applied. Preferably, the contact surface 22 is composed of a projecting part of the star-shaped profile of the second engaging portion 23. In a variant not shown the shape of the second engaging portion 23 of the tool 20 may be square, hexagonal, etc..

Figure 7 shows a second embodiment of the present invention. In this case, the fixing component for a bicycle takes the form of a fixing screw 24, having a threaded shank 25, a head 26 and an engaging portion 27 composed of a hole with trilobate profile as described above. Figure 7 also shows a part of an tool for applying a torque, with an engaging portion 28 destined to be inserted without interference into the hole 27. Also in this embodiment the tool has a contact surface 30 destined to come into contact with the front surface of the head 26 of the screw 24. The fixing screw 24 may be used for example to connect a pedal crank to the bottom bracket spindle. In this case, the engaging seat of the screw 24 is composed of the hole 15, 16 formed in one end 13, 14 of the bottom bracket spindle. The screw 24 with trilobate engaging portion may be used in any device or component for a bicycle and has the same advantages described with reference to the bottom bracket caps. The screw 24 may be composed of the same materials as the bottom bracket caps and may be obtained with the same manufacturing operations.

Of course, without prejudice to the principle of the invention, the constructional details and embodiments may vary widely in relation to what is described and illustrated herein purely as an example, without however departing from the scope of the present invention as defined in the accompanying claims.

## Claims

1. Fixing component for a bicycle, destined to be connected fixedly and removably to a complementary bicycle component, comprising a fixing portion (11, 12, 25) and an engaging portion having a profile (17, 18, 27) suitable to be engaged by a tool (20) to apply a torque, **characterized in that** said profile is substantially trilateral.

2. Component according to claim 1, **characterized in that** the trilateral profile has one or more rectilinear sides.

3. Component according to claim 1, **characterized in that** the trilateral profile has one or more at least partly curved sides.

4. Component according to claim 3, **characterized in that** one or more at least partly curved sides are arched towards the centre of the trilateral profile.

5. Component according to claim 3, **characterized in that** one or more at least partly curved sides are arched towards the outside of the trilateral profile.

6. Component according to claim 1, **characterized in that** the trilateral profile has sides of different types chosen among rectilinear, curved and arched towards the inside of the trilateral profile and curved and arched towards the outside of the trilateral profile, according to any combination.

7. Component according to claim 1, **characterized in that** the trilateral profile is substantially equilateral.

8. Component according to claim 1, **characterized in that** the trilateral profile is substantially isosceles.

9. Component according to claim 1, **characterized in that** the trilateral profile is irregular.

10. Component according to any one of the previous claims, **characterized in that** the trilateral profile has one or more rounded vertices.

11. Component according to claim 10, **characterized in that** all three vertices of the trilateral profile are rounded, so as to define a trilobate profile.

12. Component according to claim 11, **characterized in that** the three sides of the trilateral profile with rounded vertices are arched towards the inside of the trilateral profile so as to define a figure with three radial petals, angularly spaced apart.

13. Component according to claim 11, **characterized in that** the trilobate profile is configured so that coupling in rotation is produced by the lobes.

14. Component according to claim 11, **characterized in that** the trilobate profile is configured so that coupling in rotation is produced by the three sides of the profile.

15. Component according to claim 11, **characterized in that** the trilobate profile is configured so that coupling in rotation is produced by both, the sides and the lobes.

16. Component according to claim 1, **characterized in that** said profile (17, 18) has a wall (17a) with a conformation with an axially uniform section.

17. Component according to claim 1, **characterized in that** said profile (17, 18) has a wall (17a) with a tapered conformation with rectilinear generating lines.

18. Component according to claim 1, **characterized in that** said profile (17, 18) has a wall (17a) with a tapered saddle-shaped conformation, with generating profile arched towards the inside.

19. Component according to claim 1, **characterized in that** said profile (17, 18) has a wall (17a) with a tapered conformation with generating profile arched towards the outside.

20. Component according to claim 1, **characterized in that** the aforesaid engaging portion is a hole.

21. Cap for a bottom bracket shell of a bicycle, including a threaded external surface (11, 12) and a through hole (17, 18) having a profile suitable to be engaged by a tool for applying a torque, **characterized in that** the aforesaid profile is substantially trilateral.

22. Cap according to claim 21, **characterized in that** the aforesaid threaded portion (11,12) has a right thread.

23. Cap according to claim 21, **characterized in that** the aforesaid threaded portion (11,12) has a left thread.

24. Cap according to claim 21, **characterized in that** the aforesaid threaded portion (11) substantially extends along the entire length of the external cylindrical surface of the cap.

25. Cap according to claim 21, **characterized in that** it comprises a radial flange (19) destined to come into contact with a front surface of the bottom bracket shell (2).

26. Cap according to claim 21, **characterized in that** it comprises an internal cylindrical surface (9, 10) destined to receive the outer ring of a rolling bearing (5, 6).

27. Component according to any one of the claims from 1 to 20, **characterized in that** it is made in the form of a cap for the bottom bracket shell (2) of a bicycle.

28. Component according to any one of the claims from 1 to 20, **characterized in that** it is made in the form of a fixing screw having a threaded shank (25), a head (26) and an engaging portion (27) with said substantially trilateral profile (27).

29. Component according to any one of the claims from 1 to 28, **characterized in that** it is composed of a material chosen among the group comprising: aluminium or its alloys, steel or its alloys, technopolymers based on charged plastic, fabric based on structural fibres incorporated in a matrix of plastic material, said fibres being selected among carbon fibres, glass fibres, aramide fibres, boron fibres, ceramic fibres or any combination of these.

30. Component according to any one of the claims 1, 28 or 29, **characterized in that** it is obtained by milling, shearing, moulding or injection operations.

31. Tool for applying a torque to a fixing component, including at least one engaging portion (21) having a profile suitable to engage a complementary profile of a fixing component, **characterized in that** said profile is substantially trilateral.

32. Tool according to claim 31, **characterized in that** the trilateral profile has one or more rectilinear sides.

33. Tool according to claim 32, **characterized in that** the trilateral profile has one or more at least partly curved sides.

34. Tool according to claim 33, **characterized in that** one or more of the at least partly curved sides are arched towards the centre of the trilateral profile.

35. Tool according to claim 33, **characterized in that** one or more of the at least partly curved sides are arched towards the outside of the trilateral profile.

36. Tool according to claim 31, **characterized in that** the trilateral profile has sides of different types chosen among rectilinear, curved and arched towards the inside of the trilateral profile and curved and arched towards the outside of the trilateral profile, according to any combination.

37. Tool according to claim 31, **characterized in that** the trilateral profile is substantially equilateral.

38. Tool according to claim 31, **characterized in that** the trilateral profile is substantially isosceles.

39. Tool according to claim 31, **characterized in that** the trilateral profile is irregular.

40. Tool according to any one of the claims from 31 to 39, **characterized in that** the trilateral profile has one or more rounded vertices.

41. Tool according to claim 40, **characterized in that** all three vertices of the trilateral profile are rounded, so as to define a trilobate profile.

42. Tool according to claim 41, **characterized in that** the three sides of the trilateral profile with rounded vertices are arched towards the inside of the trilateral profile so as to define a figure with three radial petals, angularly spaced apart.

43. Tool according to claim 41, **characterized in that** the trilobate profile is configured so that coupling in rotation is achieved by the lobes.

44. Tool according to claim 41, **characterized in that** the trilobate profile is configured so that coupling in rotation is achieved by the three sides of the profile.

45. Tool according to claim 41, **characterized in that** the trilobate profile is configured so that coupling in rotation is achieved by both, the sides and the lobes.

46. Tool according to claim 31, **characterized in that** said profile has a wall with a conformation with an axially uniform section.

47. Tool according to claim 31, **characterized in that** said profile has a wall with a tapered conformation with rectilinear generating lines.

48. Tool according to claim 31, **characterized in that** said profile has a wall with a tapered saddle-shaped conformation, with generating profile arched towards the inside.

49. Tool according to claim 31, **characterized in that** said profile has a wall with a tapered conformation with generating profile arched towards the outside.

50. Tool according to claim 31, **characterized in that** the aforesaid engaging portion (21) has a predetermined length and terminates with a contact surface (22) destined to come into contact with an external surface of the corresponding fixing component to prevent the engaging portion of the tool (21) from being inserted too deeply inside the hole of the fixing component.

51. Tool according to claim 50, **characterized in that** the aforesaid contact surface (22) is composed of a part of a second engaging profile (23) with a different shape from the first engaging profile (21).

52. Tool according to claim 50, **characterized in that** the aforesaid second engaging portion (23) is star-shaped.

53. Tool according to claim 50, **characterized in that** the aforesaid second engaging portion is square-shaped.

54. Tool according to claim 50, **characterized in that** the aforesaid second engaging portion is hexagonal.
